# EUROPEAN PATENT SPECIFICATION

(11) **EP 2 979 754 B1**
(45) Date of publication and mention of the grant of the patent: **23.02.2022**
(21) Application number: 14776355.1
(22) Date of filing: 20.03.2014
(51) Int. Cl.: B01J 33/00, B01D 53/86, B01J 23/42, B01J 23/40

(54) **EXHAUST GAS TREATING CATALYST FOR PURIFYING EXHAUST GAS CONTAINING SILICON COMPOUND**
ABGASBEHANDLUNGSKATALYSATOR ZUR REINIGUNG VON ABGASEN MIT EINER SILICIUMVERBINDUNG
CATALYSEUR DE TRAITEMENT DE GAZ D'ÉCHAPPEMENT DESTINÉ À PURIFIER UN GAZ D'ÉCHAPPEMENT CONTENANT UN COMPOSÉ DE SILICIUM

(30) Priority: 29.03.2013 JP 2013071050
(43) Date of publication of application: 03.02.2016
(73) Proprietor: Tanaka Kikinzoku Kogyo K.K., Chiyoda-ku Tokyo 100-6422 (JP); Aisin Corporation, Kariya-shi, Aichi-ken 448-8650 (JP)
(72) Inventor: SHIRAISHI, Hirokazu, Tsukuba-shi, Ibaraki 300-4247 (JP); KIKUHARA, Shunji, Tsukuba-shi, Ibaraki 300-4247 (JP); MURAYAMA, Keiji, Chiyoda-ku, Tokyo 100-6422 (JP); UNNO, Tetsuya, Tsukuba-shi, Ibaraki 300-4247 (JP); AMANO, Takashi, Kariya-shi, Aichi 448-8650 (JP)
(74) Representative: Boult Wade Tennant LLP
(86) International application number: PCT/JP2014/057753
(87) International publication number: WO 2014/156951

(56) References cited:
- EP-A1- 1 498 181
- WO-A1-2012/132678
- JP-A- H03 254 836
- JP-A- H10 148 306
- JP-A- 2004 066 126
- JP-A- 2009 183 865
- JP-A- 2012 223 665
- US-A1- 2011 113 754

## Description

### Technical Field

The present invention relates to an exhaust gas purifying catalyst, in which the exhaust gas includes a silicon compound and is an exhaust gas of a fuel cell system which has been widely used recently or exhaust gases from various factories.

### Background Art

As an exhaust gas purifying catalyst for purifying exhaust of a fuel cell system or exhaust gases generated from various factories, that is, various factories such as painting, printing, a formation product, food, medical treatment, and chemistry, the catalyst which is prepared by applying a carrier (generally, called a wash coat) including an inorganic oxide such as alumina on a supporting body made of a metal or a ceramic material and by having a precious metal supported on the carrier to form a catalyst layer is used. Here, the exhaust gas to be treated often include a silicon compound other than hydrocarbon such as carbon monoxide, hydrogen, and other various VOCs (volatile organic compound) to be treated as an original object.

The silicon compound in the exhaust gas is largely used for a cell stack containing an electrolyte in a fuel cell system, various seal parts, a ceramic insulation material, and the like. In various factories, in addition to the case in which the silicon compound is generated as by-product of manufacturing products, the silicon compound is contained in a lubricant, a releasing agent, a desiccant, a water repelling agent, a flame retardant, an insulating material, an adhesive, an antistatic agent, a sealant, and the like, and are directly influenced or are influenced by the atmosphere or temperature, thereby being volatilized and thus being mixed in an exhaust gas.

The silicon compound in an exhaust gas has a problem of causing catalyst poisoning that reduces catalytic activity according to time for an exhaust gas purifying catalyst. It is believed that the catalyst poisoning by silicon is caused as a result that the silicon invaded into a catalyst layer (carrier layer) adheres to the active point of a precious metal. Further, since the precious metal catalyst does not have the detaching action of a silicon compound, the catalytic overall activity decreases by the accumulation of blocked active point.

Here, as the countermeasure for catalyst poisoning caused by a silicon compound, there is a method of providing an absorbent of a silicon compound on the front part of the exhaust gas purifying catalyst (Patent Document 1). However, this method makes the configuration of an exhaust gas purifying device complicated, thereby increasing the cost for the device. Therefore, to simplify the configuration of the exhaust gas purifying device, it is known to provide an adsorption action by a silicon compound to the exhaust gas purifying catalyst itself. For example, Patent Document 2 suggests the exhaust gas purifying catalyst applied with a catalyst composition containing the alumina or zeolite supported with a precious metal.

Documents JP-A-2009 183865, EP-A-1 498 181 and JP-A-2004 066126 disclose exhaust gas purifying catalysts.

### Related Art Document

### Patent Documents

Patent Document 1: JP 59-147623 A
Patent Document 2: JP 4319222 B2

### Summary of the Invention

### Problems to be Solved by the Invention

The exhaust gas purifying catalyst having the ability for removing silicon, which is suggested in Patent Document 2, is considered to have a certain effect by containing zeolite as a component having a silicon-absorption action in a catalyst layer. However, it is not so imaginable that the contact between silicon and a precious metal can be completely inhibited for the exhaust gas purifying catalyst. This is because that even though zeolite in the catalyst layer absorbs silicon, the whole silicon is not completely absorbed into the zeolite. Further, there is a possibility that the activity is slowly decreased by the accumulation of the blocked active point of a precious metal. In this regard, there still remains a question regarding whether or not the activity can be maintained for years because the exhaust gas purifying catalyst in Patent Document 2 is subjected to a test only for about several hundreds of hours.

For a period for maintaining the activity of an exhaust gas purifying catalyst, there has never been the catalyst that satisfies long-term durability, for example, a 10-year unit, for the exhausts in various factories. Further, since devices provided in a general home, like a fuel cell system, require maintenance-free characteristics for a 10-year unit, the devices require long-term activity maintenance. Therefore, an object of the present invention is to provide an exhaust gas purifying catalyst for purifying an exhaust gas containing silicon and can maintain longer-term activity compared to the related art.

### Means for Solving the Problems

In order to achieve the above-described object, the present inventors tried to form an overcoat layer on a catalyst layer for covering the catalyst layer for fundamentally removing a contact between a silicon compound and a precious metal in the catalyst layer. The conventional exhaust gas purifying catalyst contains the absorption component of silicon in the catalyst layer, but the contact between a precious metal and a silicon compound cannot be removed. It can be said that the contact between the precious metal and the silicon and poisoning can be removed by setting an overcoat layer and then trapping the silicon compound by the overcoat layer.

Meanwhile, for the configuration of the overcoat layer, when the overcoat layer simply covers a catalyst layer, the materials to be treated (for example, hydrocarbon such as carbon monoxide) in an exhaust gas does not reach the catalyst layer, and thus an original function as an exhaust gas purifying catalyst cannot be exhibited. In other words, it is required that the overcoat layer selectively traps only a silicon compound, and also allows the materials being treated in the exhaust gas to easily reach the catalyst layer. Therefore, the present inventors found zirconia and titania as a suitable material for the relevant overcoat layer, and thus completed the present invention.

Specifically, the present invention provides an exhaust gas purifying catalyst for purifying an exhaust gas containing a silicon compound as defined in claim 1.

Hereinafter, the present invention will be described in more detail. For the exhaust gas purifying catalyst according to the present invention, a catalyst layer formed on a supporting body is applied with the same configuration as that of the conventional catalyst layer. The catalyst layer is formed by having an inorganic oxide carrier with a precious metal supported on the inorganic oxide carrier. The precious metal of the catalyst layer is one of platinum, palladium, rhodium, ruthenium, and iridium in terms of catalytic activity. The amount of the precious metal supported is preferably 0.1 to 30 g/L based on the volume of a supporting body.

Further, the inorganic oxide as a carrier may be alumina, ceria, zirconia, titania, or a mixture or complex oxide thereof. The amount of the inorganic oxide carrier is preferably 60 to 200 g/L based on the volume of a supporting body.

The present invention is characterized by forming an overcoat layer on a catalyst layer as described above. The overcoat layer consists of at least any one of zirconia and titania. The overcoat layer blocks the direct contact between an exhaust gas to be treated and a catalyst layer, and fundamentally decreases the activity of an exhaust gas purifying catalyst. The inorganic oxide described above has effects of reducing a decrease in the activity and also trapping silicon.

Further, the overcoat layer has a thickness of 13 to 70 µm. The thickness of the overcoat layer does not highly affect the initial activity of a catalyst, but affects the activity after being used for a long period of time. For the overcoat layer having a thickness of less than 13 µm, the amount of silicon trapped is small, and the time for trapping silicon can be expected is short, thereby lacking durability. Therefore, the decrease in the activity of the overcoat layer becomes relatively larger after being used for a long period of time. Meanwhile, the overcoat layer having the thickness of larger than 70 µm affects the initial activity, and also leads to the blocking of cells and the cost increase. The more preferable thickness of the overcoat layer is 13 to 48 µm. Further, a silicon-trapping effect is exhibited by the overcoat layer, and thus, the overcoat layer has the effect regardless of a type of the activity of a catalyst layer.

The catalyst layer and the overcoat layer as described above are formed on a suitable supporting body, and then, constitute an exhaust gas purifying catalyst. The supporting body is made of metal such as a stainless, and of ceramic. The supporting body having a honeycomb structure is preferable. The volume, size, and the like for a supporting body having a honeycomb structure are not particularly limited. The supporting body used has the volume of 0.01 to 20 L and the cell density of 100 to 800 cpsi (16-124 cells per square centimetre) in many cases. For example, when the overcoat layer in the thickness range as described above is formed on the supporting body having the cell density of 260 cpsi (40 cells per square centimetre), the overcoat layer is formed in the amount of 50 to 250 g/L based on the volume of the supporting body. Further, in this case, more preferable amount of the overcoat layer formed is 50 to 180 g/L.

For preparing the exhaust gas purifying catalyst according to the present invention, a catalyst layer and an overcoat layer are formed on a supporting body sequentially. For forming the catalyst layer, a sol solution including an inorganic oxide is applied on a supporting body, and then, is suitably subjected to drying and heating. Then, a precious metal salt is absorbed by immersing the supporting body in a precious metal salt solution, and the supporting body is heated to support the precious metal particles. Further, the heating may be performed by immersing the supporting body in a sol solution including an inorganic oxide and a precious metal salt.

For forming the overcoat layer, the sol solution containing at least one of zirconia and titania is applied on the supporting body having the catalyst layer. For forming the overcoat layer, the sol solution is applied and then the heating is suitably performed. The heating is preferably performed at 400°C to 700°C.

The exhaust gas purifying catalyst according to the present invention is used for purifying an exhaust gas including a silicon compound. For the exhaust gas treatment, the exhaust gas is brought into contact with the exhaust gas purifying catalyst according to the present invention at a predetermined reaction temperature. At this time, the catalytic activity cannot be sufficiently obtained at the reaction temperature of 25°C or lower, and also the catalyst component is thermally deteriorated at 700°C or higher. Therefore, the catalyst inlet temperature is preferably 25°C to 700°C.

The exhaust gas to be treated according to the present invention is not particularly limited as long as the exhaust gas contains a silicon compound. The silicon compound in the exhaust gas includes all of the silicon compounds without an organic group (hydride, hydroxide, halide, and the like) in addition to an organic silicon compound (siloxide, organic silane, organic silicon, and the like). Further, the materials to be treated in the exhaust gas are not particularly limited, and various exhaust gases, for example, VOC and hydrocarbon in the exhaust gases from various factories or carbon monoxide contained in an offgas or the like from a fuel cell system may be treated.

### Advantageous Effects of the Invention

As described above, the exhaust gas purifying catalyst according to the present invention can maintain the activity thereof by avoiding catalyst poisoning generated by silicon for purifying various exhaust gases including a silicon compound for a long period of time. The present invention is suitable for an exhaust gas-treating device that is a device requiring long-term maintenance-free characteristics like a domestic fuel cell system, and also, is effective for the exhaust gas purifying devices in various factories.

### Brief Description of the Drawings

Fig. 1 is a view illustrating the results of evaluating catalytic initial characteristics of Examples 1 and 2 and Comparative Examples 1 and 2 according to a first embodiment.
Fig. 2 is a view illustrating the catalytic activities before and after deterioration of Examples 1 and 2 and Comparative Examples 1 and 3 according to the first embodiment.
Fig. 3 is a view illustrating the results of analyzing the lines of cross sections of the catalysts after deterioration of Example 2 and Comparative Example 2 according to the first embodiment.
Fig. 4 is a view illustrating the results of evaluating the initial activities when the thickness of the overcoat layer according to a second embodiment is changed.
Fig. 5 is a view illustrating the results of evaluating the activities after deterioration when the thickness of the overcoat layer according to a third embodiment is changed.

### Description of Embodiments

Hereinafter, the embodiments of the present invention will be described.

First Embodiment: A stainless-steel metal honeycomb (φ 52 mm x L 58 mm, a volume of 0.123 L, and a cell density of 260 cpsi (40 cells per square centimetre)), was used as a supporting body. This supporting body was immersed in 500 mL of a sol solution dispersed with 150 g of alumina, and was dried and burned to form an inorganic oxide carrier layer. Then, 500 mL (platinum mass: 0.25 g) of a nitric acid platinum solution (concentration: 0.05 wt%) was absorbed in the carrier layer, was dried, and then, was heated to support platinum to form a catalyst layer. At this time, the amount of platinum supported was 2 g/L. Further, the inorganic oxide carrier was 80 g/L.

Further, an overcoat layer was formed on the catalyst layer. As the overcoat layer, the supporting body having the catalyst layer as described above was immersed in 500 mL of a sol solution dispersed with 150 g of zirconia, and dried and heated to form the overcoat layer, thereby obtaining an exhaust gas purifying catalyst (Example 1). Further, the supporting body was immersed in 500 mL of sol solution dispersed with 80 g of titania, and was dried and burned in the same manner as described above to form the overcoat layer (Example 2). The amount of overcoat layer formed in these Examples was 60 g/L and the thickness of the overcoat layer was 16 µm.

Comparative Example 1: For Comparative Examples for each of the above Examples, as the overcoat layer, alumina-ceria mixed oxide that was the same as an inorganic oxide carrier was applied. In the first embodiment, the supporting body having the catalyst layer was immersed in the sol solution that was the same as the sol solution when the carrier layer is formed, and was dried and heated to form the overcoat layer, thereby obtaining an exhaust gas purifying catalyst.

Comparative Example 2: Further, as Comparative Example 2, the catalyst without an overcoat layer, which was the conventional exhaust gas catalyst, was prepared. For this catalyst, the catalyst having a catalyst layer in the first embodiment was used as it is for evaluating the characteristics.

Further, for the catalysts in Examples 1 and 2 and Comparative Examples 1 and 2, the tests for evaluating the initial characteristics and durability were performed. For evaluating the initial characteristics, the test gas including carbon monoxide that simulated the off gas of SOFC was introduced into each of the catalysts to increase the temperature of catalyst, and then, the concentration of carbon monoxide of the gas exhausted from a catalyst outlet was measured. Then, the relation between the catalyst inlet temperature and the purification rate was measured. The test conditions were as follows.
- Test gas: CO (2000 ppm) + H₂O (5%) (air balance)
- SV: 30,000 h⁻¹

Further, for the evaluation of durability, the deterioration test that stimulated the use period of ten years was performed to evaluate the catalytic activity after deterioration. For the deterioration test of catalyst, the catalyst was exposed to the gas prepared by mixing tetraethoxysilane in the gas having 10% of 02, 10% of H2O, and 80% of N2 so as to deteriorate the catalyst. The concentration of tetraethoxysilane and the exposure time were determined as follows. The amount of silica precipitated in the catalyst was predicted based on a vapor pressure of orthosilicic acid, the flow amount of exhaust gas, and the operating time at the exhaust gas purifying catalyst temperature in the process of producing orthosilicic acid under the high-temperature and vapor atmosphere by silica included in a ceramic insulation material in a SOFC stack, and again, precipitating orthosilicic acid as silica in the exhaust gas purifying catalyst. Then, the amount of silica was set to be the same as the predicted amount of silica. As for other conditions, the test was performed under the following conditions.
- SV (Space velocity: the amount of passed gas per catalytic capacity): 30,000 h⁻¹
- Catalyst inlet temperature: 250°C
- Deterioration time: 66 hours

Then, the catalytic activity in the catalyst after deterioration was evaluated. The test gas that stimulated the off gas of SOFC was introduced into each of the catalysts to measure the relation between the catalytic center temperature and the concentration of carbon monoxide in the exhausted gas. The test conditions were as follows. Note that, for this activity evaluation, the initial activity before deterioration was also measured under the same conditions.
- Test gas: CO (2000 ppm) + O₂ (about 10%) (Humidified air balance)
- SV: 30,000 h⁻¹

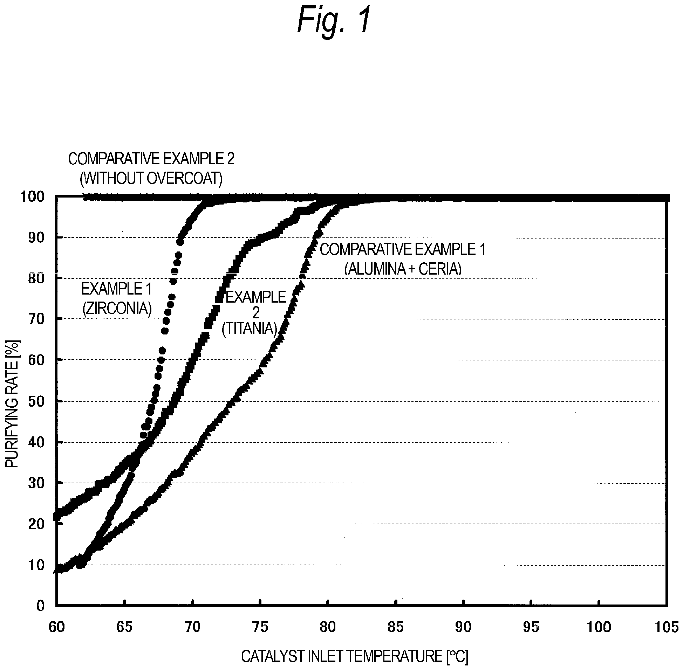

Fig. 1 illustrates the results of evaluating catalytic initial characteristics of Examples 1 and 2 and Comparative Examples 1 and 2. When comparing Examples 1 and 2 and Comparative Examples 1 and 2, basically, the formation of an overcoat layer on a catalyst layer allowed the catalyst inlet temperature to increase, thereby decreasing the initial activity of the catalyst. The reason is that the inhibition on reaching the materials (carbon monoxide) to be treated into the catalyst layer is not completely avoided by the overcoat layer. However, when zirconia (Example 1) and titania (Example 2) were applied as the overcoat layer, the decrease of the activity was relatively reduced. In contrast, the oxide (alumina + ceria) of Comparative Example 1 exhibited a significant decrease in the activity, and thus, was undesirable as an exhaust gas purifying catalyst in terms of the initial activity. In other words, it can be confirmed that not all kinds of oxides are preferably used as the component materials of the overcoat layer, but it is required to properly select the materials.

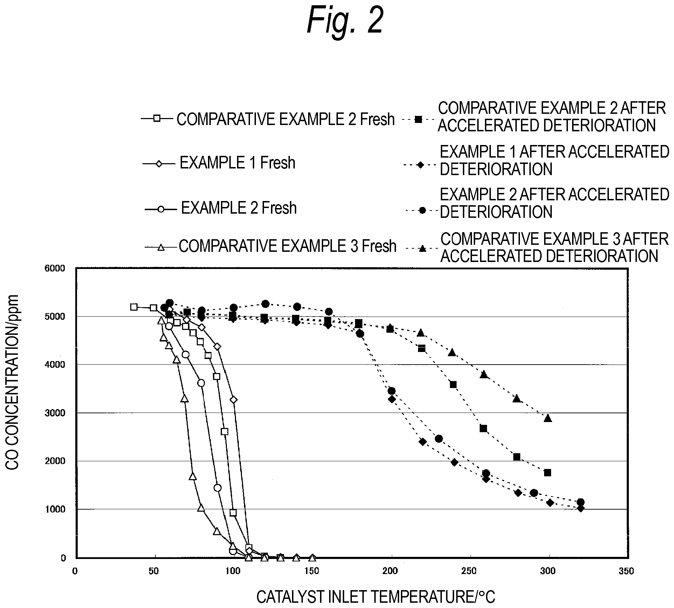

Therefore, in the following durability test, the catalysts of Examples 1 and 2 and Comparative Example 2 were tested. Further, for Comparative Example 2, the catalyst was prepared with the doubled amount of the platinum supported, and evaluated (Comparative Example 3). Fig. 2 illustrates the catalytic activities before and after deterioration as the results of the durability test.

Referring to Fig. 2, it is found the activities of all the catalysts decreased after the deterioration test. However, for the catalysts having the overcoat layers of Examples 1 and 2, the decrease in the activity was inhibited as compared with the catalyst without the overcoat layer, which had the same amount of platinum, of Comparative Example 2. From these results, it was confirmed that the catalyst poisoning by the deterioration test was reduced by the formation of the overcoat layer. Further, although the catalyst having the doubled amount of platinum of Comparative Example 3 has excellent initial activity, the decrease in the activity of the catalyst after deterioration is great. The catalyst of Comparative Example 3 has significantly increased amount of platinum and thus it is a matter of course that the initial activity of the catalyst is large. However, a large amount of a precious metal, which greatly affects the cost of an exhaust gas purifying catalyst, is undesirable in terms of the cost. Further, even though the catalyst of Comparative Example 3 has excellent initial activity, the catalyst poisoning as time passed is not avoided. Therefore, for planning practical and fundamental countermeasure to the catalyst poisoning by silicon, it was confirmed that the setting of an overcoat layer is effective.

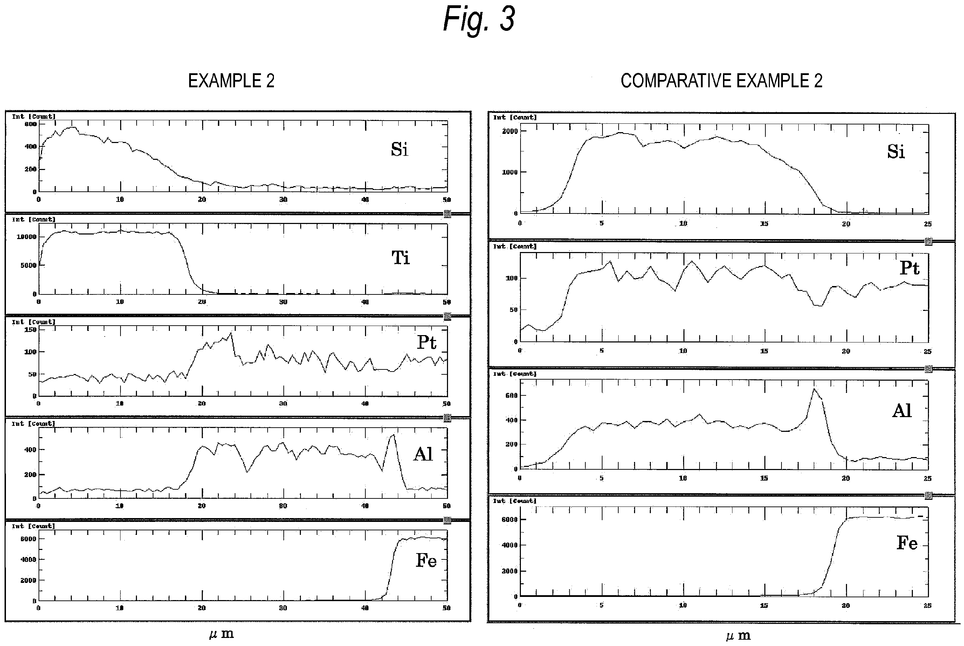

Fig. 3 illustrates the results of analyzing the lines in the cross sectional direction from a supporting body to an overcoat layer (catalyst layer) for the catalysts of Example 2 and Comparative Example 2 after the durability test. From Fig. 3, it is found that for the catalyst of Example 2, the most silicon was trapped on the overcoat layer including titania (Ti), and the silicon did not reach the catalyst layer (Pt). The activity of the catalyst layer was considered to be maintained by the trapping of silicon by the overcoat layer. Meanwhile, for the catalyst without the overcoat layer of Comparative Example 2, the silicon was accumulated on the catalyst layer (Pt), and the activity was considered to be decreased accordingly.

Second Embodiment: In this embodiment, titania was applied as an overcoat layer, and the relation between the initial activity and the thickness (formation amount) of the overcoat layer was investigated. With the same operation as in the first embodiment, a catalyst layer was formed on a supporting body, and the content of titania in a titania sol solution was adjusted to prepare the catalyst having the changed thickness of the overcoat layer. Note that, also in this embodiment, the amount of platinum supported in the catalyst was 2 g/L and the amount of the inorganic oxide carrier was 80 g/L. The test content of the evaluations of the initial activity and durability for the prepared catalyst was the same as that in the first embodiment.

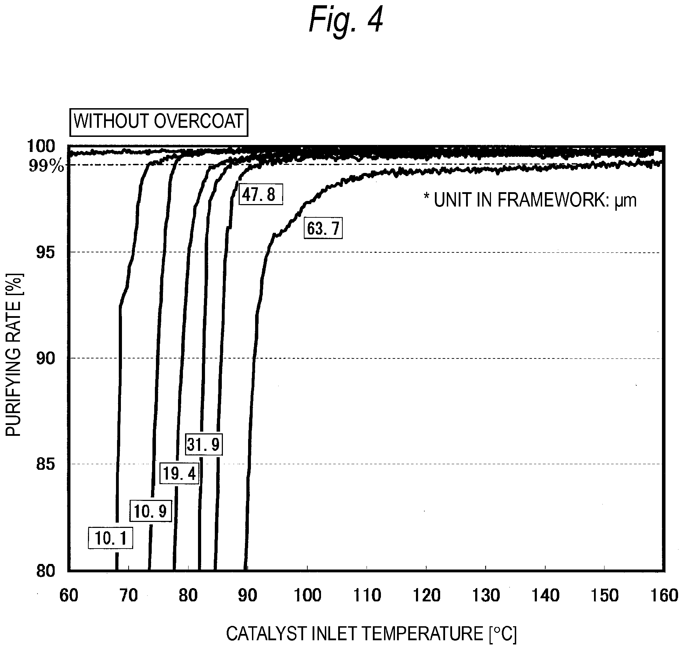

Fig. 4 illustrates the results of evaluating the initial activities when the thickness of the overcoat layer is changed. In this embodiment, the initial activity is evaluated in terms of purifying rate. It is known from these results that in the case of forming an overcoat layer, even though there was an increase in the temperature (catalyst inlet temperature) at which activity occurs, about 99% or more of the purifying rate was obtained. However, when the thickness of the overcoat layer was 63.7 µm (the formation amount of 240 g/L), the purifying rate was barely 99%. It can be said that the initial activity is an index that can determine the upper limit of the thickness of the overcoat layer. In this test range, there was no significant decrease in the activity. However, if the purifying rate was regarded to be important, it is expected that for about 70 µm of the thickness, the sufficient initial activity can be obtained.

Third Embodiment: Furthermore, the effect on durability by the thickness of the overcoat layer was investigated. As in the second embodiment, the content of titania in the titania sol solution was adjusted, and the catalyst having the changed thickness of the overcoat layer was prepared (the amount of platinum supported was 2 g/L and the amount of the inorganic oxide carrier was 80 g/L). Then, the test for evaluating durability was performed in the same operation as in the first embodiment.

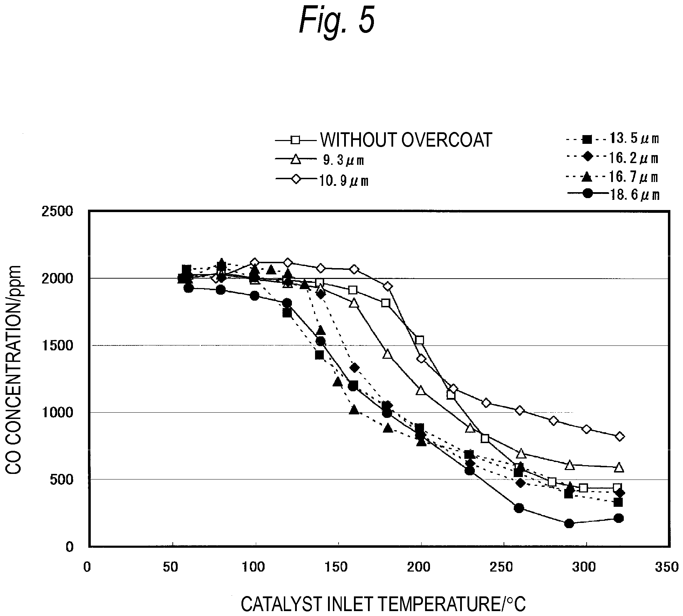

Fig. 5 illustrates the results of evaluating the activities after deterioration. The durability test results can be an index that can determine the lower limit of the thickness of the overcoat layer, but referring to Fig. 5, there was the gap of the catalytic activities between 10.9 µm (the formation amount of 41 g/L) and 13.5 µm (the formation amount of 51 g/L) of the thickness of the overcoat layer. From this result, the overcoat layer having the thickness of 13 µm or more is considered to be preferable in terms of the durability for catalyst poisoning by Si.

### Industrial Applicability

According to the present invention, for purifying various exhaust gases including a silicon compound, the catalyst poisoning by silicon can be avoided and the exhaust gases can be treated for a long period of time while the activity is maintained. Further, the present invention improves the configuration of catalyst itself, does not require any reactor for removing silicon on the front part of the catalyst, and therefore can contribute to the simplification of the configuration of exhaust gas purifying device. The present invention is effective for the exhaust gas purifying device in various factories in addition to a generating device such as a fuel cell.

## Claims

1. An exhaust gas purifying catalyst for purifying an exhaust gas containing a silicon compound, consisting of:
a supporting body;
a catalyst layer formed on the supporting body and having a precious metal supported on an inorganic oxide carrier; and
an overcoat layer covering the catalyst layer, consisting of at least one of zirconia and titania,
wherein:
a thickness of the overcoat layer is 13 to 70 µm; and
the precious metal of the catalyst layer comprises any one of platinum, palladium, rhodium, ruthenium, and iridium.

2. The exhaust gas purifying catalyst according to claim 1, wherein the inorganic oxide of the catalyst layer comprises a simple substance, a mixture, or a complex oxide of any one of alumina, ceria, zirconia, and titania.

3. An exhaust gas purifying method for purifying an exhaust gas containing a silicon compound, the method comprising:
bringing the exhaust gas into contact with the exhaust gas purifying catalyst defined in claim 1 or claim 2 at 25°C to 700°C of a reaction temperature.

## Patentansprüche

1. Abgasreinigungskatalysator zum Reinigen eines Abgases, enthaltend eine Siliziumverbindung, bestehend aus:
einem Träger-Körper;
einer auf dem Träger-Körper gebildeten Katalysatorschicht, die ein Edelmetall aufweist, das auf einem anorganischen Oxidträger getragen wird; und
eine Deckschicht, welche die Katalysatorschicht bedeckt, bestehend aus wenigstens einem von Zirkoniumoxid und Titanoxid,
wobei
eine Dicke der Deckschicht 13 bis 70 µm beträgt; und
das Edelmetall der Katalysatorschicht eines von Platin, Palladium, Rhodium, Ruthenium und Iridium umfasst.

2. Abgasreinigungskatalysator nach Anspruch 1, wobei das anorganische Oxid der Katalysatorschicht eine einfache Substanz, eine Mischung oder ein komplexes Oxid eines von Aluminiumoxid, Ceroxid, Zirkoniumoxid und Titanoxid umfasst.

3. Abgasreinigungsverfahren zum Reinigen eines Abgases, enthaltend eine Siliziumverbindung, wobei das Verfahren umfasst:
In-Kontakt-Bringen des Abgases mit dem in Anspruch 1 oder Anspruch 2 definierten Abgasreinigungskatalysators bei 25 °C bis 700 °C Reaktionstemperatur.

## Revendications

1. Catalyseur de purification de gaz d'échappement pour purifier un gaz d'échappement contenant un composé de silicium, consistant en :
un corps de support ;
une couche de catalyseur formée sur le corps de support et ayant un métal précieux supporté sur un support d'oxyde inorganique ; et
une surcouche recouvrant la couche de catalyseur, constituée d'au moins l'un parmi la zircone et l'oxyde de titane,
dans lequel :
une épaisseur de la surcouche est de 13 à 70 µm ; et
le métal précieux de la couche de catalyseur comprend l'un quelconque du platine, du palladium, du rhodium, du ruthénium et de l'iridium.

2. Catalyseur de purification de gaz d'échappement selon la revendication 1, dans lequel l'oxyde inorganique de la couche de catalyseur comprend une substance simple, un mélange ou un oxyde complexe de l'un quelconque de l'alumine, de la cérine, de la zircone et de l'oxyde de titane.

3. Procédé de purification de gaz d'échappement pour purifier un gaz d'échappement contenant un composé de silicium, le procédé comprenant l'étape consistant en :
la mise en contact du gaz d'échappement avec le catalyseur de purification de gaz d'échappement défini dans la revendication 1 ou la revendication 2 à une température de réaction de 25°C à 700°C.
